# EUROPÄISCHE PATENTANMELDUNG

(11) **EP 2 258 201 A2**
(43) Veröffentlichungstag der Anmeldung: **08.12.2010**
(21) Anmeldenummer: 10005562.3
(22) Anmeldetag: 28.05.2010
(51) Int. Cl.: A22C 15/00, A22C 17/08

(54) **Vorrichtung und Verfahren zur Befeuchtung von Würsten**

(30) Priorität: 04.06.2009 DE 202009007890 U
(71) Anmelder: Tipper Tie Alpina AG, 9201 Gossau (CH)
(72) Erfinder: Sbalzarini, Lino, 9030 Abtwil (CH); Studer, Fredi, 9542 Münchwilen (CH)
(74) Vertreter: Schalch, Rainer

(57) **Zusammenfassung**

Bei einer Vorrichtung (1) zum maschinellen Aufhängen von jeweils mit einer Hängeschlaufe (2) versehenen Würsten (3-5) an einer Tragstange ist eine Sprüheinrichtung (10) vorgesehen, mittels welcher hängend geförderte Würste mit Flüssigkeit besprühbar sind. Damit kann der Flüssigkeitsverbrauch bei der Befeuchtung von Würsten verringert werden.

## Beschreibung

Die Erfindung betrifft eine Vorrichtung zum maschinellen Aufhängen von jeweils mit einer Hängeschlaufe versehenen Würsten an einer Tragstange, bei welcher Vorrichtung ein Greifmittel für die Hängeschlaufe, eine Fördereinrichtung für die an ihrer Hängeschlaufe hängenden Würste und ein Mittel zum Abladen der geförderten Würste auf die in der Vorrichtung gehaltene Tragstange vorgesehen ist.

Derartige Vorrichtungen sind in verschiedenen Ausgestaltungen bekannt, so z.B. aus EP-A-1 891 859, EP-A-1 891 860, EP-A-0 424 675, DE-B-103 40 632 oder USA-A-2003/0096568. Es ist bei bestimmten Wurstarten, insbesondere bei Würsten vom Typ Salami bekannt, dass in einem späteren Arbeitsschritt die an der Rauchstange aufgehängten Würste an der Stange hängend in einem Tauchbad mit einer Flüssigkeit befeuchtet werden. Dies ist insbesondere eine Flüssigkeit, die eine Starterkultur (Schimmelpilzkultur) enthält, die zu dem bekannten weisslichen Belag der Wurst vom Typ Salami führt. Das Eintauchen in das Tauchbad hat sich bewährt und führt zu einer gleichmässigen Befeuchtung. Es bedarf aber einer grossen Flüssigkeitsmenge.

Der Erfindung liegt die Aufgabe zu Grunde, hier eine Verbesserung zu schaffen.

Das wird bei der eingangs genannten Vorrichtung dadurch erzielt, dass in der Vorrichtung eine Sprüheinrichtung vorgesehen ist, mittels welcher hängend geförderte Würste mit Flüssigkeit besprühbar sind.

Die Würste werden somit bereits benetzt auf die Rauchstangen aufgehängt und der separate Arbeitsgang des Tauchbades kann vollständig entfallen, was Zeit spart. Da nur eine Besprühung einzelner Würste erfolgt, wird kein Bad mit einer grossen Flüssigkeitsmenge benötigt.

Bevorzugt weist die Sprüheinrichtung Flüssigkeitsausgabeöffnungen beidseits des Förderwegs der Fördereinrichtung auf, was zu einer gleichmässigen Benetzung der Würste führt. Weiter ist es bevorzugt, dass die Sprüheinrichtung mehrere Flüssigkeitsausgabeöffnungen aufweist, welche in Förderrichtung hintereinander folgend angeordnet sind, so dass die Wurst jeweils durch eine Reihe von Sprühstrahlen hindurch läuft. Bevorzugt werden die Würste einzeln nacheinander besprüht, indem die Flüssigkeitsausgabeöffnungen derart angeordnet sind, dass jeweils nur eine der beabstandet geförderten Würste im Sprühbereich befindlich ist. Die Flüssigkeit wird bevorzugt in einem Kreislauf geführt, was die benötigte Menge reduziert. Der Flüssigkeitskreislauf umfasst einen Flüssigkeitstank, eine Pumpe, die mit der Pumpe verbundenen Flüssigkeitsausgabeöffnungen, eine sich in Förderrichtung über den Sprühbereich hinaus erstreckende Auffangeinrichtung für versprühte Flüssigkeit und von den befeuchteten Würsten abtropfende Flüssigkeit sowie einen Rücklauf von der Auffangeinrichtung zum Tank.

Die Erfindung betrifft ferner ein Verfahren zum Aufbringen von Flüssigkeit auf Würste. Damit werden die obengenannten Vorteile erzielt.

Im Folgenden werden Ausführungsbeispiele der Erfindung an Hand der Zeichnungen näher erläutert. Dabei zeigt
Figur 1 eine Draufsicht auf eine Vorrichtung gemäss einem Ausführungsbeispiel der Erfindung;
Figur 2 eine Schnittansicht entlang der Linie A-A von Figur 1
Figur 3 schematisch den Flüssigkeitskreislauf; und
Figur 4 eine Schnittansicht entlang der Linie B-B von Figur 2.

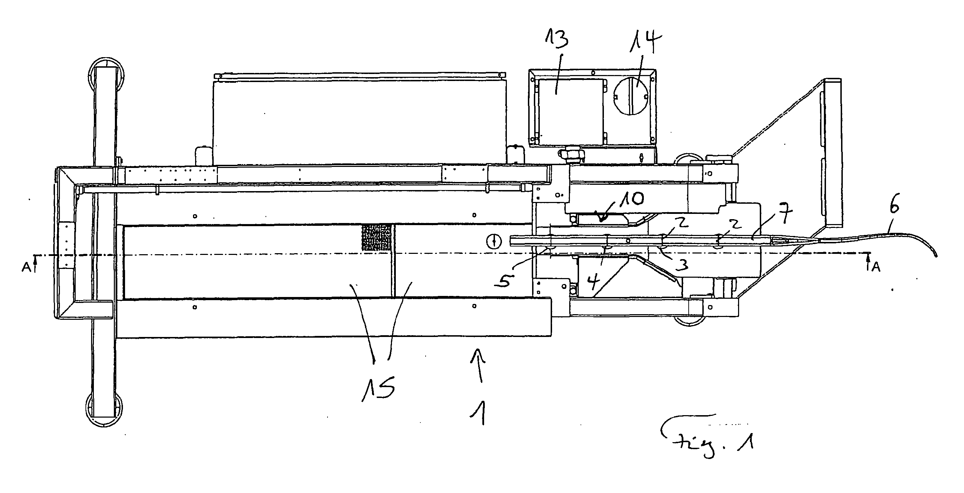

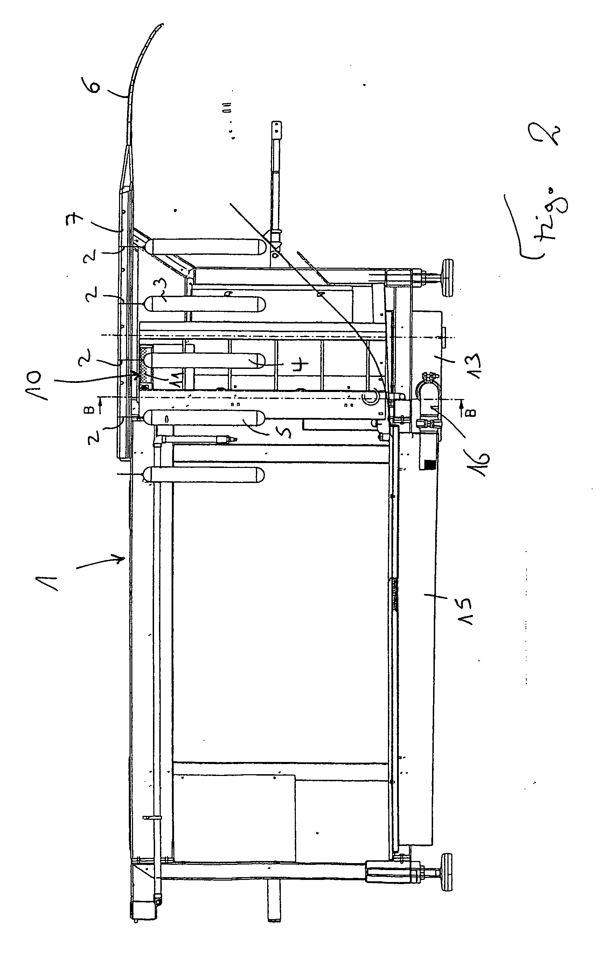

Figur 1 zeigt in Draufsicht eine grundsätzlich bekannte Vorrichtung zum Aufhängen von Würsten an Tragstangen bzw. Rauchstangen. Figur 2 zeigt dieselbe Vorrichtung in einer geschnittenen Seitenansicht entsprechend der Schnittlinie A-A von Figur 1. Die Vorrichtung 1 weist dabei ein Greifmittel 6 auf, mittels welchem die Halteschlaufen 2 von Würsten greifbar sind, wenn diese Würste aus einer nicht dargestellten Füllvorrichtung für Würste austreten; solche Füllvorrichtungen sind dem Fachmann bekannt. Das Greifmittel 6 kann auf verschiedenste Weise ausgebildet sein und ist in dem gezeigten Beispiel eine gekrümmte Greifvorrichtung in Form eines starr angeordneten Spiesses, wie sie aus EP-A-1 891 860 bekannt ist. Das Greifen der Aufhängeschlaufen 2 muss hier nicht weiter beschrieben werden, da dies dem Fachmann bekannt ist. Die Würste werden danach hängend auf einer Fördereinrichtung 7 gefördert. Dazu kann ein Kettenfördermittel vorgesehen sein, welches die Hängeschlaufen 2 mit an der Kette angeordneten Fördernocken entlang des langgestreckten Fördermittels vorschiebt. Nach dem Fördermittel werden die Würste auf eine Tragstange abgegeben, bis diese mit einer vorbestimmten Anzahl Würste versehen ist. Danach wird diese Tragstange gegen eine neue leere Tragstange ausgewechselt, was ebenfalls automatisch erfolgen kann, und der Vorgang geht weiter bis die gewünschte Anzahl von Würsten auf den Tragstangen befindlich ist. Dies ist aus dem eingangs genannten Stand der Technik bekannt und muss hier nicht weiter erläutert werden.

Gemäss der vorliegenden Erfindung ist nun eine Sprüheinrichtung 10 vorgesehen, welche die Würste entlang eines Teils des Förderwegs mit einer Flüssigkeit besprüht. Im gezeigten Beispiel ist die Sprüheinrichtung 10 so angeordnet, dass die Besprühung entlang des Förderweges der Fördereinrichtung 7 erfolgt. Dies ist die bevorzugte Ausführungsform. Es könnte allerdings eine Besprühung bereits im Bereich des Greifmittels 6 oder auch erst nach der Fördereinrichtung 7 bei der Abgabe an die Tragstange erfolgen. In dem gezeigten Beispiel sind drei Würste 3, 4, 5 besonders bezeichnet und es ist ersichtlich, dass sich die Wurst 4 im Sprühbereich befindet, welcher durch eine Mehrzahl von Flüssigkeitsausgabeöffnungen 11 definiert wird, die in der Figur als Punkte erkennbar sind und z.B. in der dargestellten Weise in Form von rechteckig angeordneten Ausgabeöffnungen an einem Sprühkopf vorliegen. Bevorzugt ist der Sprühbereich somit so angeordnet bzw. durch mehrere in Förderrichtung hintereinander liegende Flüssigkeitsausgabeöffnungen definiert, dass jeweils nur eine Wurst, im gezeigten Beispiel die Wurst 4 in der Sprüheinrichtung befindlich ist. Die bereits besprühte Wurst 5 befindet sich auf dem Weg zur Tragstange und Flüssigkeit tropft dabei von der Wurst 5 in eine Auffangeinrichtung 15 ab. Die Auffangeinrichtung erstreckt sich dabei bevorzugt vom Sprühbereich bis ans Ende des Abgabebereichs an die Tragstange, der bis zum Ende der Tragstange reicht, wie dies in Figur 1 ersichtlich ist. Der Auffangbereich kann dabei in mehrere Abschnitte unterteilt sein, wie dies in Figur 1 auch angedeutet ist.

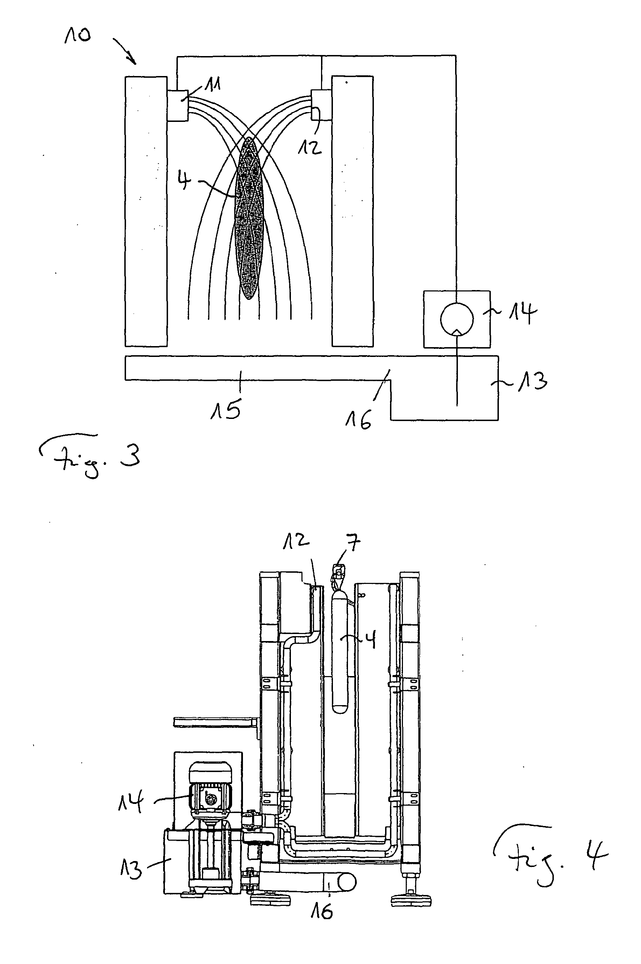

Figur 3 zeigt schematisch die Sprüheinrichtung, welche bevorzugt Flüssigkeitsausgabeöffnungen 11 und 12 aufweist, die beidseits des Förderweges für die Würste angeordnet sind, wobei in der Figur lediglich schematisch Sprühköpfe gezeigt sind, welche die Öffnungen zur Ausbringung der Flüssigkeit in Richtung auf die Wurst aufweisen, insbesondere in der aus Figur 2 ersichtlichen Anordnung von übereinander und in Förderrichtung hintereinander angeordneten Öffnungen, welche einfache Öffnungen oder düsenartig geformte Öffnungen sein können. In Figur 3 wird die Wurst 4, welche ohne ihre Hängeschlaufe und ohne die Fördereinrichtung gezeigt ist, entsprechend von beiden Seiten mit Flüssigkeitsstrahlen befeuchtet. Anstelle oder zusätzlich zu der seitlichen Besprühung kann eine Besprühung von oben vorgesehen sein.

Bevorzugt ist ein Flüssigkeitskreislauf vorgesehen, sodass die von der Auffangeinrichtung 15 sowohl im Sprühbereich wie im nachfolgenden Abtropfbereich aufgefangene Flüssigkeit über einen Rücklauf 16 in den Tank 13 gelangt, in welchem sich die Flüssigkeit befindet. Aus dem Tank 13 wird die Flüssigkeit durch eine Pumpe 14 angesaugt und von dieser zu den Flüssigkeitsausgabeöffnungen 11 und 12 gefördert. Dort tritt die Flüssigkeit aus und befeuchtet die jeweils im Sprühbereich befindliche Wurst.

Figur 4 zeigt dies in einer Schnittdarstellung der in Figur 2 gezeigten Vorrichtung entlang der Schnittlinie B-B. Gleiche Bezugszeichen bezeichnen darin wiederum gleiche Elemente.

## Patentansprüche

1. Vorrichtung (1) zum maschinellen Aufhängen von jeweils mit einer Hängeschlaufe (2) versehenen Würsten (3-5) an einer Tragstange, bei welcher Vorrichtung ein Greifmittel (6) für die Hängeschlaufe, eine Fördereinrichtung (7) für die an ihrer Hängeschlaufe hängenden Würste und ein Mittel zum Abladen der geförderten Würste auf die in der Vorrichtung gehaltene Tragstange vorgesehen ist, **dadurch gekennzeichnet, dass** in der Vorrichtung eine Sprüheinrichtung (10) vorgesehen ist, mittels welcher hängend geförderte Würste mit Flüssigkeit besprühbar sind.

2. Vorrichtung nach Anspruch 1, **dadurch gekennzeichnet, dass** die Sprüheinrichtung Flüssigkeitsausgabeöffnungen (11, 12) beidseits des Förderwegs der Fördereinrichtung aufweist.

3. Vorrichtung nach Anspruch 1 oder 2, **dadurch gekennzeichnet, dass** die Sprüheinrichtung Flüssigkeitsausgabeöffnungen oberhalb des Förderwegs der Fördereinrichtung aufweist.

4. Vorrichtung nach einem der Ansprüche 1 bis 3, **dadurch gekennzeichnet, dass** die Sprüheinrichtung mehrere Flüssigkeitsausgabeöffnungen (11, 12) aufweist, welche in Förderrichtung hintereinander folgend angeordnet sind.

5. Vorrichtung nach Anspruch 4, **dadurch gekennzeichnet, dass** die Flüssigkeitsausgabeöffnungen derart angeordnet sind, dass jeweils nur eine der beabstandet geförderten Würste im Sprühbereich befindlich ist.

6. Vorrichtung nach einem der Ansprüche 1 bis 5, **dadurch gekennzeichnet, dass** die Sprüheinrichtung einen Flüssigkeitskreislauf aufweist, umfassend einen Flüssigkeitstank (13), eine mit dem Tank saugseitig verbundene Pumpe (14), mit der Ausgabeseite der Pumpe verbundene Flüssigkeitsausgabeöffnungen (11, 12), eine sich in Förderrichtung über den Sprühbereich hinaus erstreckende Auffangeinrichtung (15) für versprühte Flüssigkeit und von den befeuchteten Würsten abtropfende Flüssigkeit sowie einen Rücklauf (17) von der Auffangeinrichtung zum Tank.

7. Verfahren zum Befeuchten von Würsten mit einer Flüssigkeit, wobei jeweils mit einer Hängeschlaufe (2) versehene Würste (3-5) maschinell an einer Tragstange aufgehängt werden, wozu eine Vorrichtung mit einem Greifmittel (6) für die Hängeschlaufe, einer Fördereinrichtung (7) für die an ihrer Hängeschlaufe hängenden Würste und einem Mittel zum Abladen der geförderten Würste auf die in der Vorrichtung gehaltene Tragstange vorgesehen ist, **dadurch gekennzeichnet, dass** in der Vorrichtung hängend geförderte Würste mittels einer Sprüheinrichtung (10) mit Flüssigkeit besprüht werden.

8. Verfahren nach Anspruch 7, **dadurch gekennzeichnet, dass** die Besprühung durch Flüssigkeitsausgabeöffnungen (11, 12) beidseits des Förderwegs der Fördereinrichtung erfolgt.

9. Verfahren nach Anspruch 7 oder 8, **dadurch gekennzeichnet, dass** die Besprühung durch Flüssigkeitsausgabeöffnungen oberhalb des Förderwegs der Fördereinrichtung erfolgt.

10. Verfahren nach einem der Ansprüche 7 bis 9, **dadurch gekennzeichnet, dass** die Besprühung mittels mehreren Flüssigkeitsausgabeöffnungen (11, 12) erfolgt, welche in Förderrichtung hintereinander folgend angeordnet sind.

11. Verfahren nach Anspruch 10, **dadurch gekennzeichnet, dass** die Besprühung mittels der Flüssigkeitsausgabeöffnungen derart erfolgt, dass sich jeweils nur eine der beabstandet geförderten Würste im Sprühbereich befindet.

12. Verfahren nach einem der Ansprüche 7 bis 11, **dadurch gekennzeichnet, dass** die Besprühung mittels er Sprüheinrichtung erfolgt, die einen Flüssigkeitskreislauf aufweist, umfassend einen Flüssigkeitstank (13), eine mit dem Tank saugseitig verbundene Pumpe (14), mit der Ausgabeseite der Pumpe verbundene Flüssigkeitsausgabeöffnungen (11, 12), eine sich in Förderrichtung über den Sprühbereich hinaus erstreckende Auffangeinrichtung (15) für versprühte Flüssigkeit und von den befeuchteten Würsten abtropfende Flüssigkeit sowie einen Rücklauf (17) von der Auffangeinrichtung zum Tank.
